# EUROPÄISCHE PATENTSCHRIFT

(11) **EP 0 969 614 B1**
(45) Veröffentlichungstag und Bekanntmachung des Hinweises auf die Patenterteilung: **17.01.2007**
(21) Anmeldenummer: 99107800.7
(22) Anmeldetag: 20.04.1999
(51) Int. Cl.: H04L 29/06, H04N 7/24

(54) **Verfahren zur Übertragung von kodierten digitalen audiovisuellen Signalen mit Verwendung des DAB Übertragungssystems**
Method for the transmission of coded digital audiovisual signals using the Digital Audio Broadcast (DAB) standard
Méthode pour la transmission de signaux audiovisuels numériques codés utilisant le standard DAB

(30) Priorität: 29.06.1998 DE 19828712
(43) Veröffentlichungstag der Anmeldung: 05.01.2000
(73) Patentinhaber: ROBERT BOSCH GMBH, 70442 Stuttgart (DE)
(72) Erfinder: Moeller, Henning, 31683 Obernkirchen (DE); Vollmer, Jens, 30159 Hannover (DE); Spreitz, Gerald, 30165 Hannover (DE); Bauer, Sven, 31134 Hildesheim (DE)

(56) Entgegenhaltungen:
- AVARO O ET AL: "The MPEG-4 systems and description languages: A way ahead in audio visual information representation" SIGNAL PROCESSING. IMAGE COMMUNICATION, ELSEVIER SCIENCE PUBLISHERS, AMSTERDAM, NL, Bd. 9, Nr. 4, 1. Mai 1997 (1997-05-01), Seiten 385-431, XP004075337 ISSN: 0923-5965
- "RADIO BROADCASTING SYSTEMS;DIGITAL AUDIO BROADCASTING (DAB) TO MOBILE, PORTABLE AND FIXED RECEIVERS" EUROPEAN TELECOMMUNICATION STANDARD, XX, XX, Mai 1997 (1997-05), Seiten 1-226, XP000669123
- "INTERNATIONAL ORGANIZATION FOR STANDARDIZATION - ORGANISATION INTERNATIONALE DE NORMALISATION, XX, XX" INTERNATIONAL ORGANIZATION FOR STANDARDIZATION - ORGANISATION INTERNATIONALE DE NORMALISATION, XX, XX, 15. Mai 1998 (1998-05-15), XP002133316
- AIGN ET AL: "MPEG-4 Video Transmission via DAB: Error Detection and Error Concealment" ITG FACHBERICHTE, VDE VERLAG, BERLIN, DE, 10. Dezember 1997 (1997-12-10), Seiten 731-736, XP002158696 ISSN: 0932-6022
- FAZEL K ET AL: "MOBILE MULTIMEDIA SERVICES VIA DAB: DMB" IEEE GLOBAL TELECOMMUNICATIONS CONFERENCE. PHOENIX, ARIZONA, NOV. 3 - 8, 1997, GLOBAL TELECOMMUNICATIONS CONFERENCE (GLOBECOM), NEW YORK, IEEE, US, Bd. 3, 3. November 1997 (1997-11-03), Seiten 1312-1317, XP000737741 ISBN: 0-7803-4199-6

## Beschreibung

### Stand der Technik

Die Erfindung betrifft ein Verfahren zur Einbindung von audiovisueller codierter Information in einen vorgegebenen rahmenstrukturierten Übertragungsstandard.

Übertragung von audiovisueller Information einschließlich Bewegbildübertragung wird für terrestrische.Rundfunksysteme heutzutage vor allem durch zwei unterschiedliche Übertragungsverfahren - DAB (Digital Audio Broadcasting) und DVB-T (Digital Video Broadcasting) - ermöglicht. Vorteile des DAB-Übertragungsstandards liegen in seiner Fehlerrobustheit, der es auch für mobile Anwendungen bei hohen Geschwindigkeiten tauglich machen, wohingegen das DVB-T System nur für portable, beziehungsweise mobile Anwendungen bei deutlich geringeren Geschwindigkeiten geeignet ist. Der wesentliche Vorteil des DVB-T Systems liegt in seiner deutlich höheren Datenrate (5-32 Mbit/s gegenüber ca. 1,5 Mbit/s max. für DAB).

Die Bewegbildübertragung mittels des DAB Übertragungsstandards [1] nutzt Videosignale, die nach dem MPEG-2 Standard [3] codiert werden. Vor ihrer Übertragung werden die codierten Videodaten gunächst mit einem zusätzlichen Fehlerschutz (FEC) versehen und dann in den DAB-Multiplex im Stream-Mode eingefügt.

Die Bewegbildübertragung nach DVB-T[2] nutzt Videosignale, die ebenfalls nach dem MPEG-2 Standard codiert werden. Auch hier werden die codierten Videodaten mit einem zusätzlichen Fehlerschutz versehen und dann den DVB-T spezifischen Komponenten (Kanalcodierung, digitale Modulation etc.) des Übertragungssystemszugeführt.

Aus "AVARO ET AL: ,The MPEG-4 systems and description languages: A way ahead in audio visual information representation' SIGNAL PROCESSING. IMAGE COMMUNICATION, ELSEVIER SCIENCE PUBLISHERS, AMSTERDAM, NL, Bd. 9, Nr. 4, 1. Mai 1997 (1997-05-O1), Seiten 385-431, XP004075337 ISSN: 0923-5965" ist es bekannt, audiovisuelle codierte Information zu separaten Datenströmen aufzubereiten, die jeweils in Datenkanälen eines rahmenstrukturierten Übertragungsstandards, z.B. DAB (Digital Audio Broadcasting), untergebracht werden. Für MPEG4-Datenströme erfolgt eine Multiplexbildung und Übertragung in verschiedenen Transportkanälen des DAB-Standards.

Aus "RADIO BROADCASTING SYSTEMS; DIGITAL AUDIO BROADCASTING (DAB) TO MOBILE, PORTABLE AND FIXED RECEIVERS' EUROPEAN TELECOMMUNICATION STANDARD, XX, XX, Mai 1997 (1997-05), Seiten 1-226, XP000669123" ist es bekannt für die Übertragung entweder den "Stream Mode" mit Unterrahmen vorgegebener Länge für Daten mit konstanter Datenrate zu verwenden oder den "Packet Mode".

Aus "INTERNATIONAL ORGANIZATION FOR STANDARDIZATION - ORGANISATION INTERNATIONALE DE NORMALISATION, XX, XX', ISO/IEC JTC 1/SC2-/WG 11 N2201, 15. Mai 1998 (1198-05-15), XP002133316" ist ebenfalls die Multiplexbildung von Datenströmen bekannt mit SL (Synchronisation Layer)-paketierten Datenströmen. Die Paketbildung und die Unterbringung im Übertragungsrahmen wird durch die Auswertung von Objektdeskriptoren gesteuert.

### Vorteile der Erfindung

Das Verfahren gemäß den Merkmalen des Anspruchs 1 sowie der Unteransprüche ist geeignet audiovisuelle codierte Information, insbesondere nach dem MPEG-4 Übertragungsstandard, in einen vorgegebenen rahmenstrukturierten Übertragungsstandard, zum Beispiel nach dem DAB-Standard, einzubinden. Die MPEG-4 spezifizierten Ausgabeformate (SL (Synchronisation Layer)- packetierte Elementardatenströme) lassen sich durch die Maßnahmen der Erfindung auf einfache Weise an die Transportmechanismen des Übertragungssystems nach dem DAB-Standard anpassen. Die eingangs genannten Fundstellen differenzieren bei der Rahmenbildung nicht zwischen Datenströmen stark schwankender Datenrate und Datenströmen annähernd konstanter Datenrate wie Bild- und/oder Tonnuztdaten. Damit ist eine Synchronisation und eine Reduzierung des Transportframe-Overheads entweder nicht gegeben oder nur mit Zusatzaufwand erreichbar, Die Vorteile der MPEG-4 Übertragung, zum Beispiel effiziente objektbasierte Kodierung synthetischer und natürlicher visueller Objekte, effektive objetbasierte Audiocodierung, eigenes Format zur Beschreibung der Anordnung audiovisueller Objekte in einer Szene (Szenenbeschreibung), Synchronisation unterschiedlicher audiovisueller Objekte, Interaktionen mit audiovisuellen Objekten, IPR Identifikation, bleiben auch nach Einbindung in einen rahmenstrukturierten Übertragungsstandard voll erhalten. Darüber hinaus kann ein zusätzlicher Bitfehlerschutz sowie eine Bitfehierverdeckung auf einfache Weise eingebracht werden.Gegenüber bisherigen Videoübertragungssystemen, zum Beispiel nach dem DVB-T Standard, ergibt sich bei der DAB-Übertragung eine volle Mobiltauglichkeit, eine hohe Frequenzökonomie durch SFN-Tauglichkeit auch bei voller Mobilität sowie geringe Empfängerkosten.

Gegenüber herkömmlichen Übertragssystemen mit MPEG-2 oder DVB-T ergibt sich bei der Einbindung von MPEG-4 in ein Übertragungsystem nach dem DAB Übertragungstandard eine flexible Handhabung, bei der sowohl die Vorteile nach dem MPEG-4 Standard als auch dem DAB Übertragungsstandard voll erhalten bleiben.

Da insbesondere Bild- und Tonnutzdaten annähernd transparent, d.h. mit einem sehr geringen Overhead, in Übertragungsrahmen vorgegebener Länge eingebunden werden, ist ein einfacher Fehlerschutz möglich. Ebenso ist ein unterschiedlicher DAB-Kanalfehlerschutz für unterschiedlich wichtige MPEG-4 Daten ohne Ändern des vorgegebenen Rahmenformats möglich. Die Möglichkeit eines zusätzlichen Kanalfehlerschutzes für unterschiedlich wichtige MPEG-4 Daten ist außerdem gegeben. Bei der Erfindung werden unterschiedliche Datenraten von MPEG-4 Elementardatenströmen durch ein DAB-Übertragungssystem unterstützt. Zeitlich schwankende Datenraten der MPEG-4 Datenströme werden innerhalb des DAB Übertragungssystems durch eine paketorientierte Übertragung unterstützt.

Eine Synchronisation der MPEG-4 Datenströme, die zwar Informationen zu ihrer gegenseitigen Synchronisation aber nicht zu ihrer eigenen Synchronisation enthalten, ist durch die DAB-Rahmenstruktur auf einfache Weise möglich.

Die Realisierung gemäß der Erfindung erfordert nur einen geringen Transportframe- Overhead.

### Zeichnungen

Anhand von Zeichnungen werden Ausführungsbeispiele der Erfindung näher erläutert. Es zeigen
Figur 1 einen MSC-data group Übertragungsrahmen,
Figur 2 eine Übersicht zur Einbindung von MPEG-4 Datenströmen in ein DAB Übertragungsystem,
Figur 3 eine Übersicht wie in Figur 2 mit zusätzlichem Fehlerschutz,
Figur 4 eine Übersicht wie in Figur 3 mit zusätzlicher Zusammenfassung mehrerer Tondatenströme.

### Beschreibung von Ausführungsbeispielen

Ein Encoder, der einen MPEG-4 konformen Datenstrom generiert, liefert an seinem Ausgang mehrere separate Datenströme, insbesondere SL (Synchronisation Layer)-packetierte Elementarströme, die Informationen hinsichtlich ihrer gegenseitigen Synchronisation aber keine Informationen zu ihrer eigenen Synchronisation, zum Beispiel Startflags oder ähnliches, enthalten. Im folgenden wird beschrieben, wie diese SL-packetierten Elementarströme in geeigneter Weise Übertragungsmechanismen, insbesondere die von einem DAB- System zur Verfügung gestellten, nutzen können, um nach ihrer Übertragung am Ausgang eines DAB-Empfängers einem MPEG-4-Decoder zugeführt zu werden.

Folgende SL-packetierten Elementarströme werden aufgrund ihrer vergleichsweise geringen und unter Umständen stark schwankenden Datenrate in einem Unterkanal (Subchannel) des DAB-MSC (Main Service Channel) im "Packet Mode" übertragen:
- initial OD - initial Object Descriptor,
- OD - Object Descriptor,
- BIFS - Binary Format for Scenes (Szenenbeschreibung),
- OCR - Object Clock Reference,
- OCI - Object Content Information.

Folgende SL - packetierten Elementarströme werden wegen ihrer annähernd konstanten und vergleichsweise zumeist höreren Datenrate in jeweils einem Subchannel des DAB-MSC im "Stream Mode" übertragen:
- Audio,
- Video.
Bei der "stream Mode" Übertragung (ETS 300 401, vergl. [1]) werden die MPEG-4 Elementardatenströme annähernd konstanter Datenrate, insbesondere die Bild-und/oder Tonnutzdaten in "logical frames" (Unterrahmen) unterteilt. Jeder "logical frame" besteht aus einem Datenburst vorgegebener Länge von z. B. 24 Millisekunden Dauer, der empfängerseitig decodiert werden kann. Die Einbindung der Nutzinformation in diesen Unterrahmen erfolgt näherungsweise transparent, das heißt die Reihenfolge der Daten und ihre zeitliche Zuordnung untereinander wird nicht verändert und es ist nur ein geringer Overhead notwendig. Bei der Stream-Mode Übertragung ist es für die Synchronisation nicht unbedingt notwendig, daß jeder DAB-Rahmen mit einem MPEG-4 Paket beginnt, auf das synchronisiert wird. Vielmehr kann ein Pointer (Zeiger) vorgesehen sein, der die Adresse des ersten MPEG-4 Paketes (Flex-Mux-Paket oder SL-Paket) in diesem Rahmen angibt. Dieser Zeiger sollte stets mit einer fest vorgegebenen Länge, z.B. vier Bytes, in einem fest vorgegebenen Bereich des DAB-Rahmens, z.B. jeweils am Anfang, eingefügt werden.

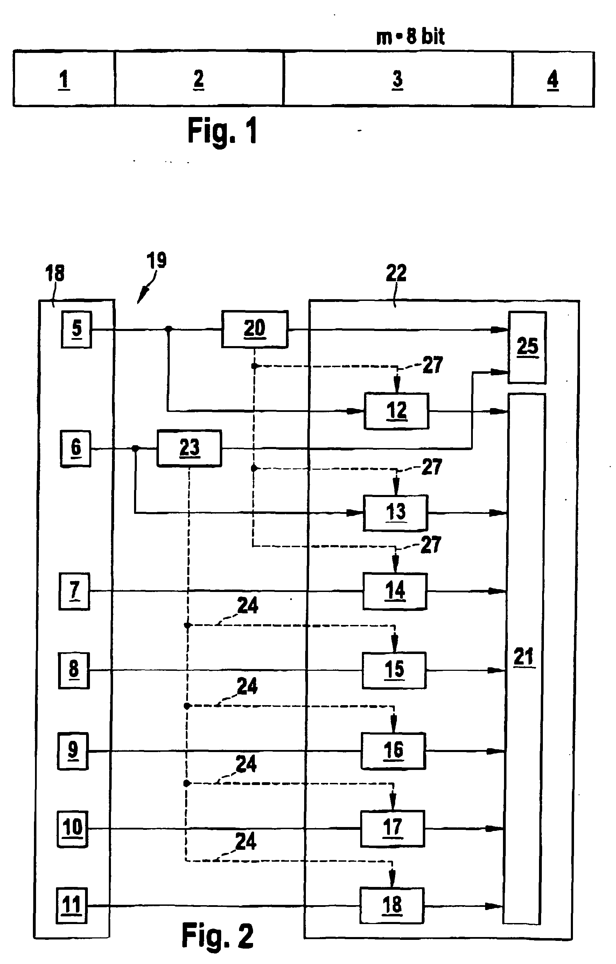

Die Struktur der Packetierung in MSC data groups (Datengruppen) ist in Figur 1 dargestellt. Eine weitere Adaption der MSC-Datengruppen an die Übertragungsrahmenstruktur ist aus [1] entnehmbar. An erster Stelle dieses Rahmens ist ein MSC data group header 1 mit einer Länge von 2 oder 4 Bytes. Daran schließt sich der "session header" 2 an, gefolgt von dem Nutzdatenfeld 3 (MSC data group data field) mit einer Länge, die einem ganzzahligen Vielfachen m von 8 kbit/s entspricht. Die restlichen 16 Bits 4 entfallen auf den MSC-data group CRC gemäß Subcl.5.3.3.1 der ETS 300 401 [1].

Figur 2 zeigt eine Übersicht zur Einbindung von MPEG-4 Datenströmen in ein DAB Übertragungssystem. Die einzelnen Elementardatenströme initial OD 5, SL-OD 6, SL-BIFS 7, SL-OCR 8, SL-Video 9, SL-Audio 10, SL-OCI 11 am Ausgang der MPEG-4 Synchronisation-Layer- Einheit 18, das heißt an deren Stream Multiplex Interface 19, werden jeweils einzeln in ein DAB-Rahmenübertragungsformat gebracht, mittels der Rahmenbildungs (Framing) - Einheiten 12, 13, 14, 15, 16, 17 und 18 und als Unterkanäle dem MSC (Main Service Channel) 21 innerhalb des DAB-Multiplexers 22 des DAB-Systems zugeführt.

Dabei können Pakete, die MPEG-4 Elementarströme unterschiedlichen Typs beinhalten, wahlweise in einem oder mehreren DAB- Unterkanälen übertragen werden.

Zwecks Ermöglichung der Synchronisation des MPEG-4 Decoders auf einzelne SL-packetierte Elementarströme im Empfänger, müssen die DAB Übertragungsrahmen stets eine feste, dem MPEG-4 Decoder im Empfänger bekannte Anzahl SL-Pakete enthalten. Ebenso muß der Anfang eines solchen SL- Paketes innerhalb eines DAB- Rahmens dem Empfänger explizit oder implizit bekannt sein. Bei mehr als einem SL-Paket pro DAB Rahmen muß die Länge der einzelnen SL-Pakete dem MPEG-4 Decoder ebenfalls explizit oder implizit bekannt sein. Dies kann z.B. durch Verwendung des MPEG-4 Flex-Mux-Tools geschehen.

Die Übertragung der MPEG-4 Daten wird innerhalb des DAB Systems zu einem Service - Baugruppe 25 innerhalb des DAB Multiplexers 22 - zusammengefaßt und mit Hilfe seiner einzelnen Komponenten, i.e. die einzelnen SL-packetierten MPEG-4 Elementarströme, definiert. Die Identifikation der MPEG-4 Elementarströme , insbesondere die Identifikation mehrerer Elementarströme gleichen Typs, wird durch eine Stream-Map-Table gewährleistet. Die einzelnen Service-Komponenten werden dabei in der DAB Service-Information aufgelistet. Zu jeder Komponente OD, BIFS, Video, usw. wird hier neben übertragungsspezifischen Angaben, z. B. DAB-Kanalnummer und ähnliches, der Typ der Service-Komponente (Data Service Type) mit Hilfe einer zunächst proparitär zu definierenden "Data Service Component Type Extension Table" (DSCTyExt) codiert. Die Stream-Map-Table wird in jedem Fall erforderlich, wenn mehrere Komponenten den gleichen Eintrag in der "Data Service Component Type Extension" (D CTyExt) Tabelle aufweisen und ihre Inhalte somit vom Decoder nicht mehr voneinander zu unterscheiden sind. Es ist anzustreben, diese Tabelle zu standardisieren, um Kompatibilitätsprobleme zwischen zwei Systemen mit unterschiedlichen proprietären Tabellen zu vermeiden.

Diese Informationen über die zu einem speziellen MPEG-4 Service gehörenden SL-packetierten Elementarströmen sind in den initial OD- und OD-Elementarströmen enthalten. Um diese Daten an das Format der DAB Service Information anzupassen, ist eine Auswertung und Reformatierung dieser codierten MPEG-4 Informationen notwendig. Die Auswertung, Reformatierung und die Stream-Map-Table Generierung erfolgt in den Auswerteeinheiten 20 und 23. Die Datenpaketbildung und die Einbindung in die Unterrahmen vorgegebener Länge wird durch Auswertung insbesondere periodisch übertragener objektbeschreibender Information mittels der Auswerteeinheiten 20 und 23 gesteuert. Es wird dazu insbesondere ein Datenfeld generiert, das den Zusammenhang zwischen den einzelnen MPEG-4 Elementarströmen , insbesondere denen gleichen Typs, und der DAB-Kanal- bzw. Paketnummer angibt. Die Vergabe der Paket-/ Kanalnummer des DAB- Multiplexers beeinflusst demnach auch die Stream-Map-Table Generierung, denn diese Information (Paket-/ Kanalnummer) geht dort ein. Mit Hilfe der ausgewerteten Informationen werden demnach die Packetierung und das Framing der jeweils referenzierten SL-packetierten Elementarströme gesteuert (Wirkungslinien 24 und 27).

Der initial OD und der OD- Elementarstrom selbst müssen ebenfalls komplett packetiert im MSC übertragen werden, da sie neben den Informationen über die Service-Komponenten noch weitere wichtige Informationen für den MPEG-4 Decoder im Empfänger enthalten.

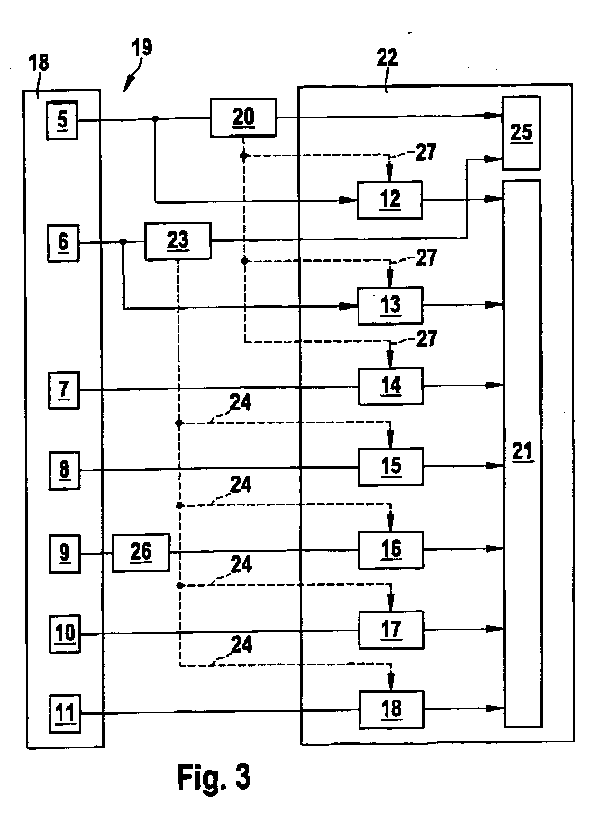

Insbesondere die Videodaten können, um eine ausreichend geringe Restfehlerrate nach Übertragung und Decodierung zu erhalten, vor der Zuführung zum eigentlichen DAB-System mit einem zusätzlichen Fehlerschutz (FEC- Forward Error Correction, z. B. mittels eines RS-Coders) versehen werden. Diese Ausgestaltung zeigt Figur 3. Hier ist vor Einfügung des Videodatenstromes 9 in den DAB Übertragungsrahmen eine Fehlerschutzeinheit 26 vorgesehen. Die Informationen über einen etwaigen zusätzlichen Fehlerschutz (FEC), der auf die MPEG-4 Datenströme angewandt wird, können in die DAB-Stream-Map-Table aufgenommen werden.

Generell können die SL-packetierten Video- und Audio-Elementarströme sowie die in einem DAB-Packet-Mode-Subchannel zusammengefaßten SL-packetierten Elementarströme mit einem unterschiedlichen Grad an Kanalfehlerschutz, das heißt verschiedenen "Protection Levels", durch das DAB System versehen werden. Sollen die SL-packetierten BIFS-, OCI- und OD Elementarströme, bzw. der initial OD, mit unterschiedlichem Kanalfehlerschutz versehen werden, so müssen diese Daten in mehreren, separaten DAB-Subchannel im Packet Mode übertragen werden. Gegebenenfalls können einzelne Datenströme mit einem weiteren zusätzlichen Vorwärtsfehlerschutzmechanismus - ähnlich dem Videodatenstrom - versehen werden.

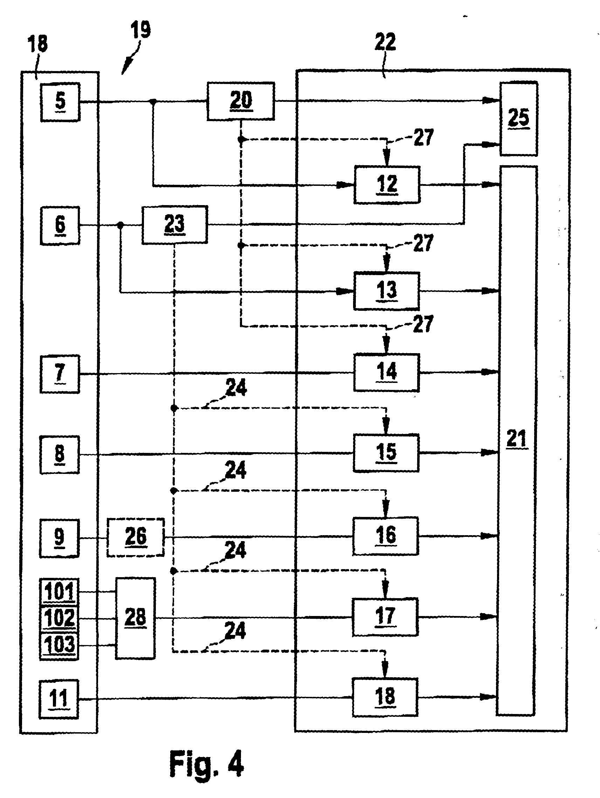

Bei der Ausgestaltung nach Figur 4 sind mehrere MPEG-4 Tondatenströme 101, 102, 103 vorgesehen, die vor der Einbindung in den DAB Übertragungstandard mittels eines Multiplexers 28 zu einem gemeinsamen Multiplex-Datenstrom zusammengefügt werden. Zur Bildung des Multiplex-Datenstroms kann der in MPEG-4 als optional vorgesehene "Flex-Mux" verwndet werden. Bei der Erstellung der Stream-Map-Table müssen die einzelnen Kanalnummern dieser zusammengefaßten Tondatenströme berücksichtigt werden, um eine eindeutige Zuordnung bei der Decodierung der DAB-Daten bzw. der MPEG-4 Daten zu erhalten.

Die DAB-Stream-Map-Table sollte zusammenhängend mit dem initial OD übertragen werden.

Die Signalisierung der MPEG-4 Elementarströme, die in den verschiedenen MSC-Unterkanälen übertragen werden, wird durch eine Multiplex Configuration Information und der Service Information vorgenommen.

Die Spezifikation der nach ISO/IEC 14496 aufbereiteten Elementarströme ist aus [4] zu entnehmen. Dort ist auch das "Framing" von SL-Paketen beschrieben.

Wenn ein SL-Paket oder ein oder mehrere über einen Multiplexer zusammengefaßten Pakete nicht mit dem Format eines logischen Rahmens übereinstimmen, kann dies durch Bitstopfen ausgeglichen werden.
\1\ ETS 300 401: "Radio broadcasting systems: Digital Audio Broadcasting (DAB) to mobile, portable and fixed receivers", ETSI 1997.
\2\ ETS 300 744: "Digital broadcasting systems for television, sound and data Services; Framing structure, channel coding and modulation for digital terrestrial television", ETSI 1996.
\3\ ISO/IEC 13818: "Generic coding of moving pictures and associated audio information", ISO/IEC 1996.
\4\ ISO/IEC FCD 14496: "Generic coding of audio-visuel object", Final Committee Draft of International Standard, ISO/IEC 1998.

## Patentansprüche

1. Verfahren zur Einbindung von audiovisueller codierter Information in einen vorgegebenen rahmenstrukturierten Übertragungsstandard mit folgenden Schritten:
- Die audiovisuelle codierte Information wird zu separaten packetierten Datenströmen (5, 6, 7, 8, 9, 10, 11) aufbereitet, die jeweils in Datenkanälen eines rahmenstrukturierten Übertragungsstandards (22) untergebracht werden,
- soweit es sich um packetierte Datenströme (5, 6, 7, 8, 11) stark schwankender Datenrate handelt, erfolgt die Einbindung der Datenströme in den rahmenstrukturierten Übertragungsstandard (22) datenpaketweise,
- soweit es sich um packetierte Datenströme (9, 10) in Form von Bild- und/oder Tonnutzdaten mit annähernd konstanter Datenrate handelt, erfolgt die Einbindung der Datenströme in den rahmenstrukturierten Übertragungsstandard innerhalb von Unterrahmen vorgegebener Lange.

2. Verfahren nach Anspruch 1, **dadurch gekennzeichnet, dass** die Datenpaketbildung und die Einbindung in die Unterrahmen vorgegebener Länge gesteuert wird durch Auswertung (20, 23) von objektbeschreibender Information, die insbesondere periodisch übertragen wird.

3. Verfahren nach Anspruch 1 oder 2, **dadurch gekennzeichnet, dass** als objektbasiert codierte Information MPEG-4 Daten verwendet werden und als rahmenstrukturierter Übertragungsstandard der DAB, Digital Audio Broadcasting,-Übertragungsstandard verwendet wird.

4. Verfahren nach einem der Ansprüche 1 bis 3, **dadurch gekennzeichnet, dass** vor Einfügung der separaten Datenströme in denrahmenstrukurienen Übertragungsstandard mindestens ein Datenstrom, insbesondere ein Videodatenstrom (9), mit einem Fehlerschutz (26), insbesondere einem FEC, Forward Error Correction,-Kanalfehlerschutz, versehen wird.

5. Verfahren nach einem der Ansprüche 1 bis 4, **dadurch gekennzeichnet, dass** gleichartige separate Datenströme vor Einbindung in den rahmenstrukturierten Übertragungsstandard zu einem Multiplexsignal (28) zusammengefaßt werden.

6. Verfahren nach einem der Ansprüche 1 bis 5, **dadurch gekennzeichnet, dass** vor Einfügung der separaten Datenströme in den rahmenstrukturierten Übertragungsstandard unterschiedliche Datenströme mit einem unterschiedlichen Grad an Fehlerschutz versehen werden.

7. Verfahren nach einem der Ansprüche 3 bis 6, **dadurch gekennzeichnet, dass** insbesondere SL, Synchronisation Layer,-packetierte Datenströme (5, 6, 7, 8, 11) von MPEG-4 Daten in einem Unterkanal eines DAB-MSC, Digital Audio Broadcasting-Main Service Channel, im "Packet Mode" übertragen werden.

8. Verfahren nach einem der Ansprüche 3 bis 7, **dadurch gekennzeichnet, dass** Datenströme in Form von Bild- und/oder Tonnutzdaten (9, 10)mit annähernd konstanter Datenrate, in jeweils einem Unterkanal des DAB-MSCDigital Audio Boadcasting-Main Service Channel, im "Stream Mode" übertragen werden.

9. Verfahren nach einem der Ansprüche 1 bis 8, **dadurch gekennzeichnet, dass** die Übertragung der audiovisuellen codierten Information oder MPEG-4 Daten innerhalb eines DAB, Digital Audio Broadcasting-Übemagungstandard zu einem Dienst (25) zusammengefasst wird, der neben seinen Komponenten, das heißt einzelnen Datenströmen, übertragungsspezifische Angaben, sowie Angaben über den Typ der Dienstekomponenten enthält.

10. Verfahren nach Anspruch 9, **dadurch gekennzeichnet, dass** zur Aufbereitung des Dienstes (25) innerhalb des DAB-Übertragungsstandards eine Auswertung (20, 23) der audiovisuellen codierten Information oder MPEG-4 Daten sowie eine entsprechende Reformatierung und Generierung eines Datenfeldes, das den Zusammenhang zwischen einzelnen MPEG-4 Datenströmen, insbesondere denen gleichen Typs, und der DAB, Digital Audio Broadcasting,-Kanal- bzw. Paketnummer angibt, vorgenommen wird.

11. Verfahren nach einem der Ansprüche 8 bis 10,
**dadurch gekennzeichnet, dass** zur Synchronisierung der Datenübertragung im "Stream-Mode" ein Zeiger vorgesehen wird, der die Adresse eines ersten MPEG-4 Paketes im jeweiligen Unterrahmen angibt.

## Claims

1. Method for incorporating audio-visual encoded information into a prescribed frame-structured transmission standard having the following steps:
- the audio-visual encoded information is conditioned to form separate packetized data streams (5, 6, 7, 8, 9, 10, 11) which are respectively accommodated in data channels from a frame-structured transmission standard (22),
- as far as packetized data streams (5, 6, 7, 8, 11) at a greatly fluctuating data rate are concerned, the data streams are incorporated into the frame-structured transmission standard (22) in data packets,
- as far as packetized data streams (9, 10) in the form of image and/or audio useful data at an approximately constant data rate are concerned, the data streams are incorporated into the frame-structured transmission standard within subframes of prescribed length.

2. Method according to Claim 1, **characterized in that** the data packet formation and the incorporation into the subframes of prescribed length are controlled by evaluating (20, 23) object-describing information which is transmitted periodically, in particular.

3. Method according to Claim 1 or 2, **characterized in that** MPEG-4 data are used as information encoded in object-based form, and the DAB (Digital Audio Broadcasting) transmission standard is used as frame-structured transmission standard.

4. Method according to one of Claims 1 to 3, **characterized in that** before the separate data streams are inserted into the frame-structured transmission standard at least one data stream, particularly a video data stream (9), is provided with error protection (26), particularly FEC (Forward Error Correction) channel error protection.

5. Method according to one of Claims 1 to 4, **characterized in that** separate data streams of the same type are combined to form a multiplex signal (28) before incorporation into the frame-structured transmission standard.

6. Method according to one of Claims 1 to 5, **characterized in that** before the separate data streams are inserted into the frame-structured transmission standard different data streams are provided with a different level of error protection.

7. Method according to one of Claims 3 to 6, **characterized in that** particularly SL-packetized (Synchronization Layer) data streams (5, 6, 7, 8, 11) of MPEG-4 data are transmitted in a subchannel of a DAB-MSC (Digital Audio Broadcasting-Main Service Channel) in "Packet Mode".

8. Method according to one of Claims 3 to 7, **characterized in that** data streams in the form of image and/or audio useful data (9, 10) at an approximately constant data rate are transmitted in a respective subchannel of the DAB-MSC (Digital Audio Broadcasting-Main Service Channel) in "Stream Mode".

9. Method according to one of Claims 1 to 8, **characterized in that** the transmission of the audio-visual encoded information or MPEG-4 data within a DAB (Digital Audio Broadcasting) transmission standard is combined to form a service (25) which, besides its components, that is to say individual data streams, contains transmission-specific details, and also details about the type of the service components.

10. Method according to Claim 9, **characterized in that**, to condition the service (25) within the DAB transmission standard, the audio-visual encoded information or MPEG-4 data is/are evaluated (20, 23) and also a data field which indicates the relationship between individual MPEG-4 data streams, particularly those of the same type, and the DAB (Digital Audio Broadcasting) channel or packet number is appropriately reformatted and generated.

11. Method according to one of Claims 8 to 10,
**characterized in that**, to synchronize the data transmission in "Stream Mode", a pointer is provided which indicates the address of a first MPEG-4 packet in the respective subframe.

## Revendications

1. Procédé d'intégration d'une information codée audiovisuelle dans un standard de transmission à structure de trame prédéfinie, comprenant les étapes suivantes :
- on prépare l'information audiovisuelle codée sous la forme de flux de données en paquets séparés (5, 6, 7, 8, 9, 10, 11), placés dans chaque fois des canaux de données d'un standard de transmission à reconstruction de trame (22),
- dans la mesure où il s'agit de flux de données en paquets (5, 6, 7, 8, 11) à vitesse de transmission variant fortement, l'intégration du flux de données dans le standard de transmission (22) à reconstruction de trame se fait par paquets de données,
- dans la mesure où s'agit de flux de données en paquets (9, 10) sous la forme de données vidéo et/ou audio, à vitesse de transmission sensiblement constante, l'intégration des flux de données dans le standard de transmission à reconstruction de trame se fait à l'intérieur de trames secondaires de longueur prédéfinie.

2. Procédé selon la revendication 1,
**caractérisé en ce qu'**
on commande la formation des paquets de données et d'intégration dans des sous-trames de longueur donnée par l'exploitation (20, 23) d'informations décrivant l'objet et notamment transmises de manière périodique.

3. Procédé selon la revendication 1 ou 2,
**caractérisé en ce que**
pour l'information codée basée sur un objet on utilise des données MPEG-4 et comme standard de transmission à reconstruction de trame on utilise le standard DAB, c'est-à-dire le standard de transmission radio audionumérique.

4. Procédé selon l'une des revendications 1 à 3,
**caractérisé en ce qu'**
avant d'insérer les flux de données séparés dans le standard de transmission à reconstruction de trame, on munit au moins un flux de données notamment un flux de données vidéo (9) d'une protection de défaut (26), notamment d'une protection d'erreur de canal FEC à transmission de correction d'erreur.

5. Procédé selon l'une des revendications 1 à 4,
**caractérisé en ce qu'**
on regroupe des flux de données séparés, de même type, avec leur intégration dans le standard de transmission à reconstruction de trame pour former un signal multiplex (28).

6. Procédé selon l'une des revendications 1 à 5,
**caractérisé en ce qu'**
avant l'insertion des flux de données séparés dans le standard de transmission à reconstruction de trame on prévoit des flux de données différents avec un degré différent de protection contre les défauts.

7. Procédé selon l'une des revendications 3 à 6,
**caractérisé en ce qu'**
on transmet notamment des flux de données en paquets SL, (synchronisation de couche) (5, 6, 7, 8, 11) de données MPEG-4 dans un sous-canal d'un canal DAB-MSC, (canal de service principal radio audionumérique) en « mode paquet ».

8. Procédé selon l'une des revendications 3 à 7,
**caractérisé en ce qu'**
on transmet les flux de données sous la forme de données utiles vidéo et/ou audio (9, 10) à vitesse de transmission pratiquement constante dans chaque fois un sous-canal du canal DAB-MSC, (canal de service principal de radio audionumérique) en « mode flux ».

9. Procédé selon l'une des revendications 1 à 8,
**caractérisé en ce qu'**
on regroupe la transmission de l'information audiovisuelle codée ou des données MPEG-4 dans un standard de transmission d'émission radio numérique audio DAB en un service (25) qui comporte en plus de ces composants, c'est-à-dire de flux de données séparés, de missions de transmissions spécifiques, également des données concernant les types de composants de données.

10. Procédé selon la revendication 9,
**caractérisé en ce que**
pour préparer le service (25) dans le standard de transmission DAB on effectue une exploitation (20, 23) de l'information à codage audiovisuel ou données MPEG-4 ainsi qu'un reformatage correspondant d'une génération d'un champ de données, indiquant la relation entre les différents flux de données MPEG-4, notamment de même type et le numéro de paquet ou de canal, d'émission audio-numérique DAB.

11. Procédé selon l'une des revendications 8 à 10,
**caractérisé en ce que**
pour synchroniser la transmission des données en « mode flux », on prévoit un index qui indique l'adresse d'un premier paquet MPEG-4 dans chaque sous-trame.
